# FASCICULE DE BREVET EUROPEEN

(11) **EP 1 734 849 B1**
(45) Date de publication et mention de la délivrance du brevet: **25.02.2009**
(21) Numéro de dépôt: 05735481.3
(22) Date de dépôt: 07.03.2005
(51) Int. Cl.: A47J 27/21

(54) **APPAREIL ELECTRIQUE DE CHAUFFAGE DE LIQUIDE**
ELEKTRISCHES GERÄT ZUM ERHITZEN VON FLÜSSIGKEIT
ELECTRIC LIQUID-HEATING APPLIANCE

(30) Priorité: 07.04.2004 FR 0403662
(43) Date de publication de la demande: 27.12.2006
(73) Titulaire: SEB S.A., 69130 Ecully (FR)
(72) Inventeur: LABELLE, Guy, F-72610 Champfleur (FR); BINOT, Jean-Pierre, F-72130 St Ouen De Mimbre (FR)
(74) Mandataire: Kiehl, Hubert
(86) Numéro de dépôt international: PCT/FR2005/000545
(87) Numéro de publication internationale: WO 2005/107539

(56) Documents cités:
- EP-A- 0 549 953
- GB-A- 2 272 629

## Description

La présente invention se rapporte à un appareil électrique de chauffage de liquide, tel que par exemple une bouilloire électrique. Plus particulièrement, l'invention concerne un appareil électrique de chauffage de liquide comprenant un boîtier qui définit une enceinte destinée à contenir un liquide, une ouverture supérieure de remplissage de l'enceinte, qui est délimitée par un pourtour, des moyens électriques de chauffage du liquide, un organe verseur communiquant avec ladite enceinte et s'étendant à proximité de l'ouverture, et un couvercle adapté à obturer ladite ouverture, ledit couvercle comportant :
- un verrou mobile qui est susceptible de venir en prise avec un élément de retenue du boîtier ;
- une commande de verrouillage reliée au verrou et mobile entre une position verrouillée dans laquelle le verrou est en prise avec l'élément de retenue lorsque le couvercle est mis en place et une position déverrouillée dans laquelle le verrou est inopérant ; et
- une languette mobile entre une position rétractée dans laquelle elle est logée dans le couvercle et une position sortie dans laquelle elle obture l'organe verseur.

Le document FR-A-2 756 476 décrit une bouilloire électrique de ce type dont le couvercle est amovible et est muni d'une languette mobile entre une position sortie et une position rétractée dans le couvercle. En position sortie, la languette obture l'organe verseur. Ainsi, les déperditions de chaleur sont limitées si le liquide contenu dans la bouilloire a été préalablement chauffé. En outre, si la bouilloire est renversée, la languette évite les projections de liquide sur une distance importante et limite le débit du liquide qui peut s'écouler par l'organe verseur.

Toutefois, la languette décrite dans le document FR-A-2 756 476 est toujours rappelée en position sortie, de sorte que lorsque l'on enlève le couvercle pour remplir la bouilloire, celui-ci est particulièrement encombrant. De plus, si l'on fait tomber le couvercle, la languette qui est réalisée par une lame de matière plastique relativement mince peut s'abîmer, voire se casser.

La présente invention a pour but de pallier ces inconvénients en proposant un appareil électrique de chauffage de liquide ayant un couvercle dont l'encombrement et la solidité sont équivalents aux couvercles de bouilloires dépourvus de languette tout en restant pratique d'utilisation.

A cet effet, la présente invention a pour objet un appareil du type précité, caractérisé en ce que la languette est reliée à la commande de verrouillage par un mécanisme d'actionnement adapté à placer la languette soit en position sortie lorsque la commande de verrouillage est en position verrouillée, soit en position rétractée lorsque la commande de verrouillage est en position déverrouillée, ladite position déverrouillée étant stable.

Ainsi, lorsque l'utilisateur veut enlever le couvercle pour remplir la bouilloire, il place la commande de verrouillage en position déverrouillée, et par conséquent, la languette vient automatiquement en position rétractée, puis il enlève le couvercle du pourtour de l'ouverture avec la languette qui demeure en position rétractée du fait que la position déverrouillée de la commande est stable.

Dans des formes de réalisation préférées de l'invention, on a recours, en outre, à l'une et/ou à l'autre des dispositions suivantes :
- la languette est montée coulissante par rapport au couvercle selon une direction sensiblement radiale par rapport à la direction normale de l'ouverture, et dans lequel la commande de verrouillage est montée rotative par rapport au couvercle autour d'un axe sensiblement parallèle à ladite direction normale, notamment dans le but de réduire la hauteur du couvercle ;
- le couvercle est monté amovible dans le pourtour de l'ouverture, et comprend un fond venant en contact avec ledit pourtour de l'ouverture et une face supérieure qui forme la commande de verrouillage, ledit fond et ledit pourtour présentant des reliefs adaptés à coopérer ensemble de manière à interdire la rotation du fond par rapport au boîtier ;
- le mécanisme d'actionnement comprend un levier pivotant muni d'une came, et la commande de verrouillage présente une face interne comportant un guide de came qui s'étend depuis une première extrémité jusqu'à une deuxième extrémité agencée à une distance de l'axe de pivotement de la commande de verrouillage qui est supérieure à la distance de la première extrémité audit axe, ladite came suivant ledit guide de came de la première extrémité à la deuxième extrémité lorsque la commande de verrouillage passe de la position déverrouillée à la position verrouillée, et inversement ;
- le levier pivotant présente une première extrémité comportant un ergot qui forme le verrou, qui est rétracté dans le couvercle lorsque la commande de verrouillage est en position déverrouillée, et qui fait saillie à travers une fenêtre du couvercle lorsque la commande de verrouillage est en position verrouillée, ledit ergot étant susceptible de venir en prise avec l'élément de retenue agencé dans le pourtour de l'ouverture lorsque la commande de verrouillage passe de la position déverrouillée à la position verrouillée ;
- la came du levier pivotant est sollicitée contre le guide de came de la commande de verrouillage par un moyen élastique ; ainsi, la languette est susceptible d'être rétractée en écartant la came du levier pivotant du guide de came, c'est-à-dire autrement que par la commande de verrouillage ;
- le mécanisme d'actionnement comprend un organe pivotant autour d'un axe sensiblement parallèle à la direction normale de l'ouverture, et le levier pivotant présente une deuxième extrémité munie d'une denture qui engrène un premier secteur denté pratiqué sur l'organe pivotant, ledit organe pivotant étant muni d'au moins un deuxième secteur denté qui engrène une denture linéaire reliée à la languette;
- lesdits levier et organe pivotants sont adaptés à créer un déplacement linéaire amplifié de la languette par rapport au déplacement de la première extrémité dudit levier;
- l'ensemble des éléments du mécanisme d'actionnement est mobile dans un plan parallèle au plan moyen de l'ouverture, de manière à ce que le couvercle soit aussi peu encombrant que possible ;
- le boîtier présente une lumière qui débouche dans l'organe verseur et dans laquelle s'étend la languette lorsque la commande de verrouillage est en position verrouillée.

D'autres caractéristiques et avantages de l'invention apparaîtront au cours de la description qui va suivre, donnée à titre d'exemple non limitatif, en référence aux dessins annexés dans desquels :
- la figure 1 est une vue en perspective éclatée des principaux éléments d'une bouilloire réalisée selon l'invention qui comprend un couvercle muni d'une commande de verrouillage et une poignée ;
- la figure 2 est une vue partielle en coupe longitudinale dans le plan de la poignée de la bouilloire représentée à la figure 1 ;
- la figure 3 est une vue de dessous en perspective d'un élément du couvercle ;
- la figure 4 est une vue en perspective du couvercle avec la commande de verrouillage en position déverrouillée ;
- la figure 5 est une vue en perspective partielle de la bouilloire avec le couvercle et la commande de verrouillage en position déverrouillée ;
- la figure 6 est une vue de dessus arrachée et simplifiée de la figure 5 ;
- la figure 7 est une vue analogue à la figure 5, dans laquelle la commande de verrouillage est en position verrouillée ;
- la figure 8 est une vue analogue à la figure 6, dans laquelle la commande de verrouillage est en position verrouillée.

Sur les différentes figures, on a conservé les mêmes références pour désigner des éléments identiques ou similaires.

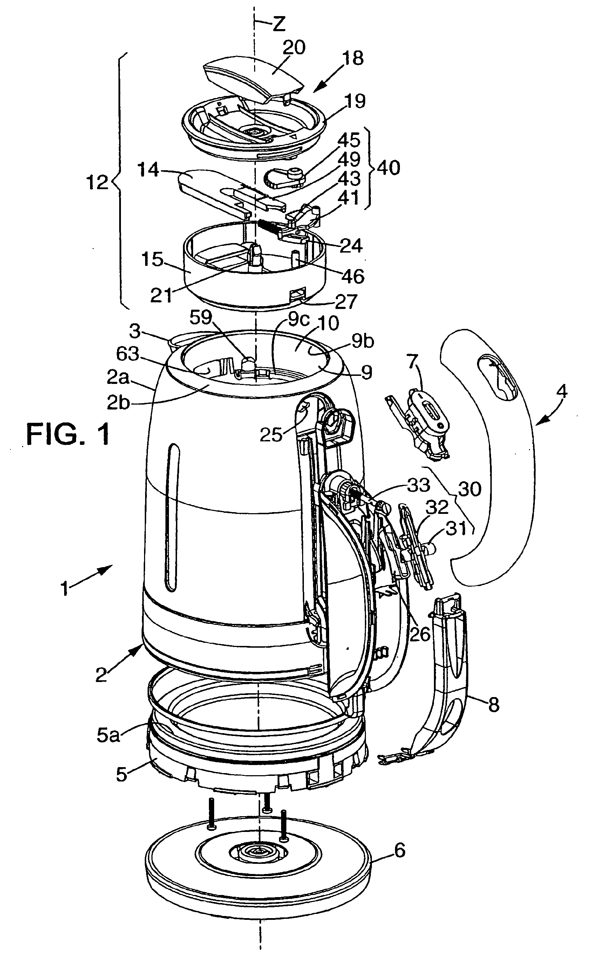

La bouilloire électrique 1 représentée à la figure 1 comprend un boîtier 2 dont le corps 2a définit une enceinte sensiblement cylindrique centrée sur un axe vertical Z. Le boîtier 2 comprend également un organe verseur 3, une poignée 4 et un fond 5.

Le fond 5 comporte une plaque métallique 5a délimitant le fond de l'enceinte qui est en contact avec une résistance électrique, non visible, de manière à chauffer l'eau ou tout autre liquide contenu dans l'enceinte.

Le fond 5 de la bouilloire est destiné à reposer sur une base 6 munie en son centre d'une fiche électrique. Le fond 5 comprend de manière connue une prise adaptée pour établir une connexion électrique avec la fiche de la base 6 quelle que soit l'orientation de la bouilloire reposant sur la base. L'intérieur du fond 5 comprend, en plus de la résistance électrique, un interrupteur pour établir une connexion entre la prise et la résistance électrique. Le fonctionnement de la bouilloire est commandé par un bouton marche/arrêt 7 agencé sur la poignée 4 et relié à l'interrupteur par un levier 8.

Le boîtier 2 présente dans sa partie supérieure un pourtour 9 qui définit une ouverture 10. Cette ouverture 10 présente une surface relativement étendue de manière à permettre un remplissage aisé de l'enceinte. Le pourtour 9 est formé par une paroi annulaire du boîtier qui présente une portion verticale cylindrique 9b coaxiale à l'axe Z et une collerette 9c s'étendant radialement vers l'axe central Z depuis le bas de la portion verticale. La surface de l'ouverture ainsi définie par le pourtour 9 présente une direction normale colinéaire à l'axe central Z. Toutefois, l'enceinte et l'ouverture 10 pourraient présenter des configurations autres que cylindriques ou présenter des axes symétriques qui ne seraient pas colinéaires.

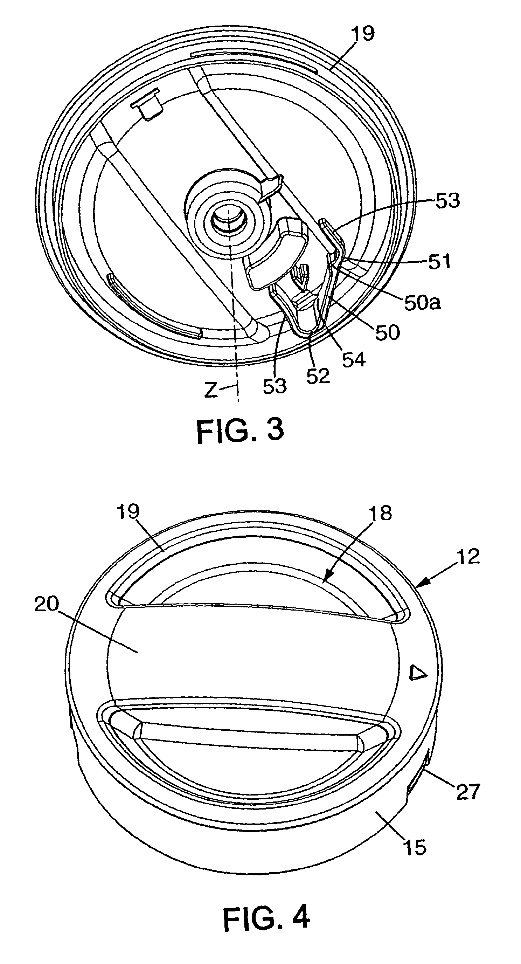

La bouilloire comprend également un couvercle amovible 12 adapté à obturer l'ouverture 10, qui a ici la forme d'un cylindre de faible hauteur comme cela est mieux visible sur la figure 4, de manière à coopérer avec le pourtour 9 de l'ouverture. Mais le couvercle pourrait présenter une forme différente, notamment dans le cas où le pourtour de l'ouverture serait une face globalement plane s'étendant essentiellement dans un plan transversal à l'axe central Z.

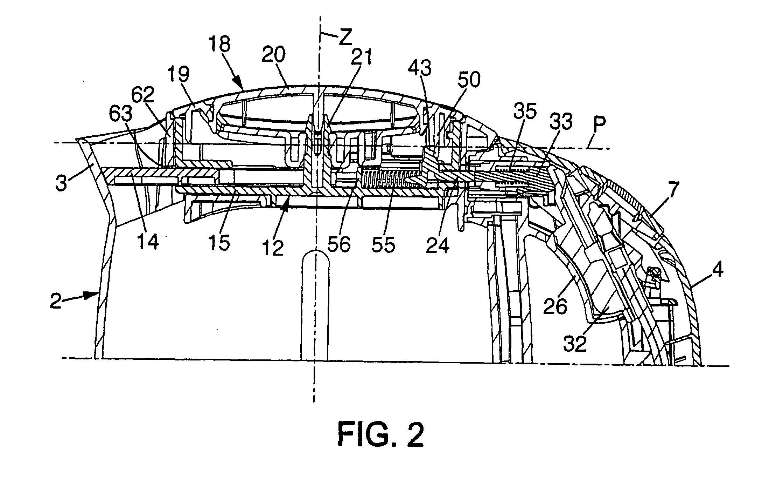

Le couvercle 12 comporte une languette 14 montée mobile sur celui-ci entre une position rétractée, visible aux figures 4, 5 et 6, dans laquelle elle est logée dans le couvercle, et une position sortie, visible aux figures 2, 7 et 8, dans laquelle elle s'étend en dehors du couvercle de manière à obturer l'organe verseur 3. L'obturation réalisée par la languette n'est pas complètement étanche, mais permet d'éviter des projections importantes de liquide dans le cas où la bouilloire est renversée.

Bien entendu, l'organe verseur 3 doit s'étendre au moins en partie à proximité de l'ouverture 10 de manière à ce que la languette 14 liée au couvercle 12 ne s'étende pas sur une distance trop importante entre l'ouverture et l'organe verseur, et conserve une forme relativement simple. Toutefois, l'organe verseur 3 pourrait présenter une forme plus saillante par rapport au corps 2a du boîtier.

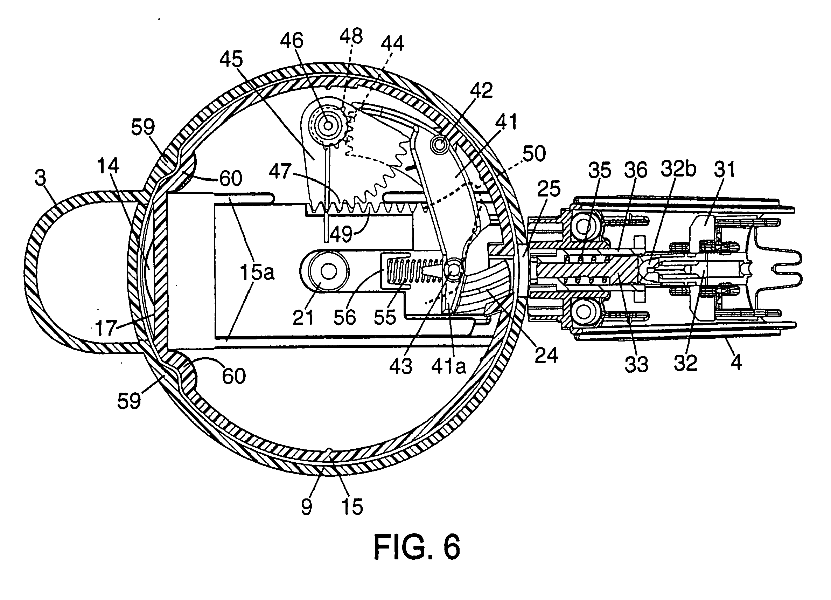

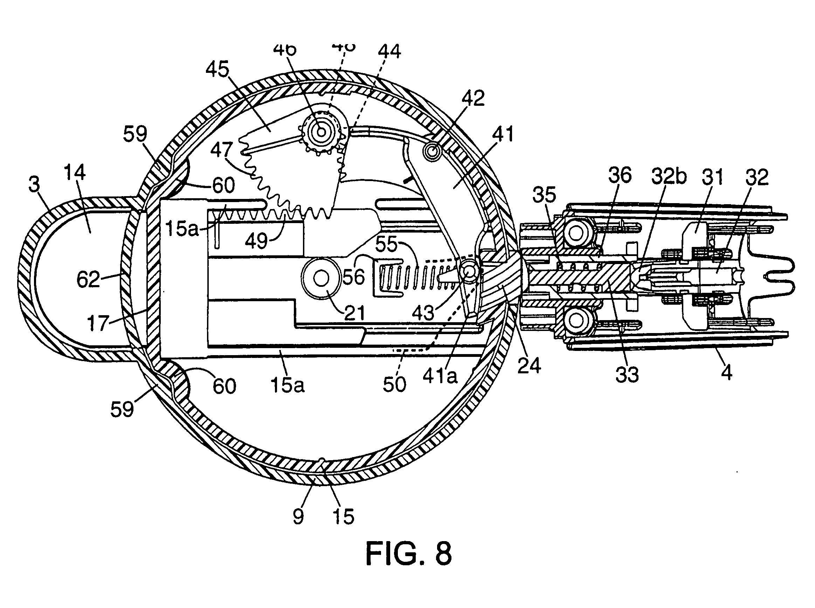

Dans le mode de réalisation représenté, le mouvement de la languette 14 est guidé à l'intérieur d'une pièce en forme de cuvette 15 qui forme le fond du couvercle 12. Ce fond 15 présente sur sa face inférieure deux nervures 15a (figures 6 et 8) qui guident la languette 14 selon une direction radiale par rapport à l'axe central Z à travers une ouverture 17 (figure 6).

Le couvercle 12 est équipé en outre d'une commande de verrouillage 18 qui comprend un premier élément 19 formant la face supérieure circulaire du couvercle et un organe de préhension 20 assemblé à la face supérieure par encliquetage.

La commande de verrouillage 18 est montée rotative autour d'un axe 21 solidaire du fond du couvercle et s'étendant selon l'axe central Z. La commande de verrouillage 18 tourne sous un angle d'environ 30°, par exemple dans le sens horaire, entre deux positions, dites respectivement déverrouillée et verrouillée, qui sont repérables par des marquages en forme de flèche réalisés sur la face supérieure 19 du couvercle et sur le bord supérieur 2b du boîtier, au niveau de la poignée 4.

Le couvercle 12 comprend de plus un ergot 24 mobile entre une position rétractée et une position sortie dans laquelle il coopère avec une fenêtre 25 traversant le pourtour 9 de l'ouverture. L'ergot 24 forme un premier verrou qui vient en prise avec un élément de retenue du boîtier formé par la fenêtre 25, empêchant ainsi le retrait du couvercle 12 de la bouilloire.

La poignée 4 de la bouilloire est en forme d'anse, mais pourrait être ouverte. Elle présente sur sa face en regard du corps 2a une ouverture à travers laquelle une gâchette 26 est montée mobile. La gâchette 26, ainsi disposée sous la poignée, est reliée par un premier mécanisme 30, dit mécanisme de gâchette, pour réaliser une commande de versage. La commande de versage permet à l'utilisateur de rétracter plus ou moins la languette 14 dans le couvercle 12 de manière à libérer le passage de l'organe verseur 3 lorsqu'il veut verser le liquide contenu dans la bouilloire.

La commande de verrouillage 18 est reliée à la languette 14 et à l'ergot 24 par un deuxième mécanisme 40, dit mécanisme d'actionnement, qui sera détaillé ci-après. La commande de verrouillage 18 est stable dans chacune des positions verrouillée / déverrouillée. Cette stabilité peut être obtenue par le frottement de la face supérieure 19 contre le bord supérieur du fond 15, mais aussi grâce au mécanisme d'actionnement 40. On notera que cette stabilité peut être obtenue différemment, notamment si la commande de verrouillage n'est pas rotative, mais coulissante le long d'un chemin de came qui pourrait alors comporter des moyens de blocage de la commande en position déverrouillée.

Le mécanisme de gâchette 30 comprend la gâchette 26 faisant saillie à travers une ouverture de la poignée et solidaire d'une première extrémité d'un levier 32 monté basculant autour d'un axe 31, ainsi qu'un piston 33 monté coulissant selon une direction radiale et contre lequel appuie une deuxième extrémité 32b du levier basculant 32. Le piston 33 coulisse dans une pièce tubulaire 36 dans laquelle est disposé un ressort 35 pour rappeler la gâchette 26 en position inactive.

Le mécanisme d'actionnement 40, qui permet d'atteindre le but de la présente invention, relie la commande de verrouillage 18 à la languette 14. Le mécanisme d'actionnement 40 comprend un levier pivotant 41 autour d'un axe 42 parallèle à l'axe central Z. A proximité d'une première extrémité 41a du levier pivotant est agencé l'ergot 24 et une came 43 en forme de pion cylindrique vertical. L'ergot 24 s'étend en arc de cercle dans le plan moyen de l'ouverture et selon une direction globalement radiale par rapport à l'axe central Z. Le levier pivotant 41 présente à une deuxième extrémité une denture 44 en arc de cercle.

Le mécanisme d'actionnement 40 comprend également un organe pivotant 45 autour d'un axe 46 qui est aussi parallèle par rapport à l'axe central Z. L'organe pivotant 45 comporte un premier secteur denté 47 de rayon relativement important et un deuxième secteur denté 48 coaxial au premier, mais de rayon nettement inférieur. Le deuxième secteur denté 48 engrène la denture 44 du levier pivotant 41, de sorte que le pivotement du levier 41 entraîne un pivotement en sens contraire de l'organe 45. Du fait que la denture 44 du levier 41 présente un rayon, mesuré par rapport à l'axe 42, supérieur au rayon de la deuxième denture 48, le pivotement en sens contraire de l'organe 45 est amplifié par rapport au pivotement du levier 41.

Le premier secteur denté 47 de l'organe pivotant 45 engrène une denture linéaire 49 formée sur une patte qui s'étend dans le prolongement de l'extrémité postérieure de la languette 14. Dans le présent mode de réalisation, la denture linéaire 49 est intégralement formée avec la languette 14 et est donc solidaire de celle-ci. Toutefois, il est envisageable de prévoir un certain jeu ou un moyen élastique entre la denture linéaire et la languette, par exemple pour que la languette vienne en appui plus ou moins étanche contre la paroi intérieure de l'organe verseur 3.

L'engrènement du premier secteur denté 47 avec la denture linéaire 49 permet de transformer le mouvement de pivotement de l'organe 45 en un mouvement de translation horizontale de la languette 14, laquelle translation est encore amplifiée par rapport à l'amplitude du déplacement de la première extrémité 41a du levier pivotant 41 par la différence des rayons existant entre les premier et deuxième secteurs dentés (47, 48). A titre indicatif, on obtient un déplacement de 27 mm de la languette 14 pour un déplacement radial de l'extrémité de l'ergot 24 d'environ 4 mm.

Comme on le voit mieux sur la figure 3, le côté intérieur de la face supérieure 19, qui forme la commande de verrouillage 18, comporte un guide de came 50 qui s'étend selon l'axe central Z à partir du côté intérieur et selon une corde de la face supérieure circulaire 19 entre une première extrémité 51 et une deuxième extrémité 52. Les extrémités 51 et 52 sont prolongées par des pattes 53 qui s'étendent parallèlement au diamètre de la face circulaire. La première extrémité 51 est située à une distance de l'axe de pivotement confondu avec l'axe central Z, qui est inférieur à la distance de la deuxième extrémité 52 à cet axe de pivotement. Le secteur angulaire formé entre la première extrémité 51, l'axe Z et la deuxième extrémité 52, est d'environ 30°.

Le guide de came 50 se présente ainsi sous la forme d'une aile avec une face latérale 54 orientée vers l'axe central Z contre laquelle la came 43 du levier pivotant 41 vient en appui. L'appui de la came 43 est obtenu grâce à un ressort de compression hélicoidal 55 disposé entre une butée 56 solidaire du fond 15 du couvercle 12 et la première extrémité 41a du levier pivotant 41. Du fait de l'élasticité de l'appui de la came 43 contre le guide de came 50, il est possible d'écarter celle-ci du guide de came 50, notamment à l'aide du mécanisme de gâchette 30 pour rétracter plus ou moins la languette 14 dans le couvercle, et ce avec la commande de verrouillage 18 maintenue en position verrouillée.

Mais il est envisageable dans un mode de réalisation différent de réaliser un guidage positif de la came 43 le long d'un guide de came qui serait formé par une fente ou une rainure de la face supérieure 19.

On notera que la face latérale 54 du guide de came 50 n'est pas rectiligne, mais présente un bossage 50a à proximité de la première extrémité 51. Ce bossage 50a forme un point dur lorsque la came 43 coulisse le long du guide de came, ce qui permet de réaliser un certain blocage de la came 43 lorsqu'elle est contre la première extrémité 51 du guide. Cette disposition impose à l'utilisateur d'exercer un effort pour quitter la position déverrouillée de la commande de verrouillage 18, et par conséquent, cette position déverrouillée est stable.

Comme on le voit mieux aux figures 6 et 8, le pourtour 9 de l'ouverture comporte deux reliefs 59 saillants vers l'axe central Z et le couvercle 12 comporte sur la pièce 15 deux reliefs 60 en creux complémentaires. Les reliefs (59, 60) coopèrent ensemble lorsque le couvercle cylindrique 12 est placé avec une orientation correcte par rapport au pourtour 9 de l'ouverture, de manière à ce que la languette 14 soit positionnée en regard de l'organe verseur 3, assurant ainsi une fonction de détrompage. Toutefois, avec un couvercle dans lequel la languette n'est pas entièrement rétractée, cette fonction de détrompage pourrait être réalisée par la languette elle-même.

Dans le présent mode de réalisation, les reliefs (59, 60) assurent en plus une fonction anti-rotation du couvercle par rapport au pourtour 9 de l'ouverture, après mise en place du couvercle 12. Ainsi, le couple exercé sur l'organe de commande 18 à partir de la position déverrouillée, dans laquelle la languette est rétractée, pour effectuer une rotation dudit organe 18 vers sa position verrouillée, n'entraîne pas une rotation du fond 15 du couvercle 12.

Dans le mode de réalisation représenté, l'organe verseur 3 est séparé de l'ouverture 10 par une cloison 62 du pourtour 9. Comme cela est mieux visible sur la figure 2, la cloison 62 s'étend dans le prolongement du pourtour 9 depuis le sommet de la portion verticale du pourtour, mais sur une hauteur inférieure pour ménager une lumière 63 qui débouche dans l'organe verseur 3 et dans laquelle la languette 14 peut s'étendre vers l'organe verseur 3. Lorsque la languette 14 est en position sortie, c'est-à-dire lorsque la commande de verrouillage 18 est en position verrouillée, celle-ci vient se positionner de façon adjacente avec l'extrémité inférieure de la cloison 62, de sorte que le couvercle 12 est immobilisé sur le boîtier 2 de la bouilloire. La lumière 63 et la languette 14 forment ainsi un deuxième élément de retenue solidaire du boîtier et donc un deuxième verrou mobile par rapport au couvercle, en plus de celui formé par la fenêtre 25 du pourtour 9 et l'ergot 24 du levier 41.

Il est envisageable de ne prévoir que la languette 14 et la lumière 63 pour assurer le verrouillage du couvercle sur le boîtier. Toutefois, la présence de deux points de verrouillage, qui de plus sont diamétralement opposés par rapport à l'axe central Z, assure un maintien particulièrement fiable du couvercle sur le boîtier même si la bouilloire est renversée.

On notera que le verrou mobile par rapport au couvercle pourrait être réalisé différemment. Par exemple, la commande de verrouillage 18 pourrait présenter une ou plusieurs pattes radiales s'étendant vers l'extérieur qui viendraient en prise avec des crochets formés sur le boîtier 2 lors du déplacement de la commande 18 de la position déverrouillée à la position verrouillée.

Lorsque l'utilisateur veut obturer la bouilloire, il prend le couvercle 12 qui est naturellement dans la configuration représentée à la figure 4, c'est-à-dire avec la commande de verrouillage 18 en position déverrouillée comme nous le verrons ci-après. Dans cette configuration, la languette 14 et l'ergot 24 sont en position rétractée et le couvercle présente un encombrement minimum.

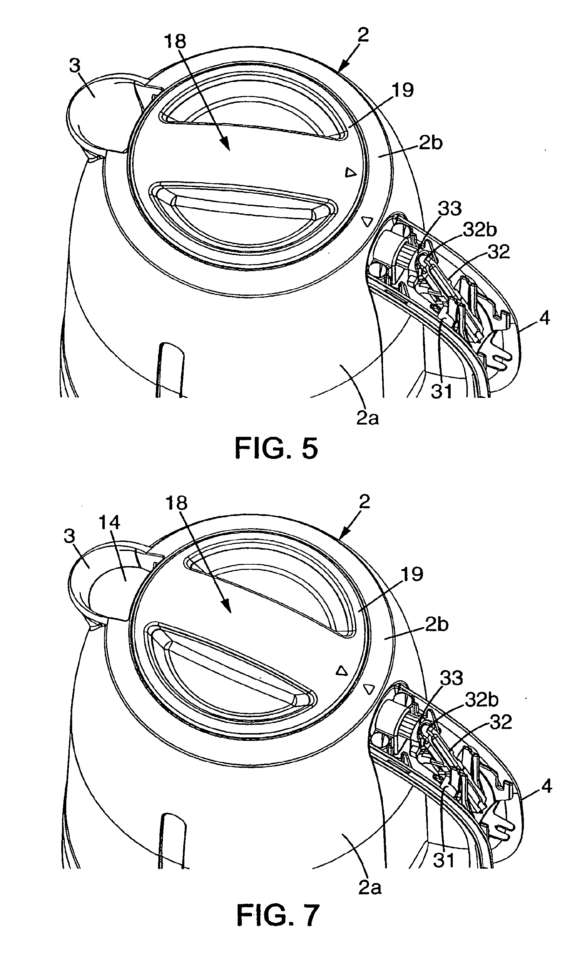

Grâce aux reliefs (59, 60), le couvercle 12 ne peut venir se loger dans le pourtour 9 qu'avec l'orientation représentée à la figure 5. Dans cette orientation, la flèche repère de l'organe de commande 18 est disposée à un angle d'environ 30° de l'autre flèche repère située au niveau de la poignée 4, ce qui correspond à la position déverrouillée, position qui peut être signalée par un pictogramme apposé sur le bord supérieur 2b du boîtier.

Comme cela est mieux visible à la figure 6, la languette 14 est en regard de l'organe verseur 3 et l'ergot 24 en regard de la fenêtre 25 du pourtour, tout en étant toujours rétractés. La rétractation de la languette 14 et de l'ergot 24 est obtenue par l'appui de la came 43 contre la première extrémité 51 du guide de came 50, représenté de façon symbolique par une ligne discontinue sur la figure 6. Bien entendu, dans cette position, l'utilisateur peut retirer le couvercle en exerçant une traction verticale sur la commande 18.

Pour verrouiller le couvercle sur la bouilloire, l'utilisateur effectue une rotation en sens horaire d'environ 30° de la commande 18 pour obtenir la configuration représentée à la figure 7, dans laquelle le repère de la commande de verrouillage 18 vient en regard du repère de la poignée 4. Au cours de cette rotation, la came 43 du levier pivotant 41 glisse le long du guide de came 50 et atteint la deuxième extrémité 52 de celui-ci. La première extrémité 41a du levier pivotant effectue un déplacement sensiblement radial vers l'extérieur et l'ergot 24 fait saillie à travers la fenêtre correspondante 27 du couvercle pour venir en prise dans la fenêtre 25 du pourtour 9. Ce pivotement du levier 41 entraîne également, par l'intermédiaire de l'organe pivotant 45 et de la denture linéaire 49, un mouvement de coulissement radial vers l'extérieur de la languette 14 à travers la lumière 63. On obtient ainsi une obturation de l'organe verseur 3 par la languette 14 et un double verrouillage du couvercle, à la fois par l'ergot 24 et par la languette 14.

Dans cette configuration représentée à la figure 7, l'actionnement de la gâchette permet de rétracter plus ou moins partiellement la languette 14 dans le couvercle pour permettre le versage du liquide.

Si l'utilisateur souhaite ouvrir la bouilloire à partir de la configuration verrouillée, il doit effectuer une rotation en sens anti-horaire de la commande de verrouillage 18 pour venir dans la configuration représentée à la figure 5 où la commande de verrouillage 18 est en position déverrouillée. Cette position déverrouillée de la commande est stable, notamment grâce au bossage 50a du guide de came et au frottement de la face supérieure 19 contre le fond 15 qui forme le couvercle. Ensuite, l'utilisateur retire le couvercle 12 du pourtour 9 de l'ouverture, qui est dans la configuration représentée dans la figure 4, et ce sans opération supplémentaire pour rétracter l'ergot et la languette. Par conséquent, sans manipulation supplémentaire de la commande de verrouillage 18 par rapport au couvercle 12, la languette 14 est toujours rétractée dans le couvercle lorsque celui-ci est retiré de la bouilloire.

On notera que l'ensemble des éléments du mécanisme d'actionnement 40, à savoir le levier pivotant 41, l'organe pivotant 45 et la denture linéaire 49 sont mobiles dans un plan qui est parallèle au plan moyen de l'ouverture dont la trace P est visible à la figure 2, ou encore perpendiculaire à l'axe central Z. Cette disposition permet de réaliser un couvercle dont l'encombrement selon la direction normale Z de l'ouverture 10 est particulièrement réduit. Mais bien entendu, il n'est pas exclu de mettre en oeuvre un mécanisme d'actionnement agencé différemment pour atteindre les buts de l'invention ; de même, les formes de l'ouverture de remplissage, des moyens de verrouillage et de l'organe verseur peuvent être sensiblement différentes.

## Revendications

1. Appareil électrique de chauffage de liquide comprenant un boîtier (2) qui définit une enceinte destinée à contenir un liquide, une ouverture supérieure (10) de remplissage de l'enceinte, qui est délimitée par un pourtour (9), des moyens électriques de chauffage du liquide, un organe verseur (3) communiquant avec ladite enceinte et s'étendant à proximité de l'ouverture, et un couvercle (12) adapté à obturer ladite ouverture, ledit couvercle comportant :
- un verrou mobile (24) qui est susceptible de venir en prise avec un élément de retenue (25) du boîtier ;
- une commande de verrouillage (18) reliée au verrou et mobile entre une position verrouillée dans laquelle le verrou est en prise avec l'élément de retenue lorsque le couvercle est mis en place et une position déverrouillée dans laquelle le verrou est inopérant ; et
- une languette (14) mobile entre une position rétractée dans laquelle elle est logée dans le couvercle et une position sortie dans laquelle elle obture l'organe verseur (3), **caractérisé en ce que** la languette (14) est reliée à la commande de verrouillage (18) par un mécanisme d'actionnement (40) adapté à placer la languette (14) soit en position sortie lorsque la commande de verrouillage (18) est en position verrouillée, soit en position rétractée lorsque la commande de verrouillage (18) est en position déverrouillée, ladite position déverrouillée étant stable.

2. Appareil selon la revendication 1, dans lequel la languette (14) est montée coulissante par rapport au couvercle (12) selon une direction sensiblement radiale par rapport à la direction normale (Z) de l'ouverture, et dans lequel la commande de verrouillage (18) est montée rotative par rapport au couvercle autour d'un axe sensiblement parallèle à ladite direction normale.

3. Appareil selon la revendication 2, dans lequel le couvercle (12) est monté amovible dans le pourtour (9) de l'ouverture (10), et comprend un fond (15) venant en contact avec ledit pourtour (9) de l'ouverture et une face supérieure (19, 20) qui forme la commande de verrouillage (18), ledit fond (15) et ledit pourtour (9) présentant des reliefs (59,60) adaptés à coopérer ensemble de manière à interdire la rotation du fond (15) par rapport au boîtier (2).

4. Appareil selon la revendication 2 ou 3, dans lequel le mécanisme d'actionnement (40) comprend un levier pivotant (41) muni d'une came (43), et dans lequel la commande de verrouillage (18) présente une face interne comportant un guide de came (50) qui s'étend depuis une première extrémité (51) jusqu'à une deuxième extrémité (52) agencée à une distance de l'axe de pivotement (Z) de la commande de verrouillage qui est supérieure à la distance de la première extrémité audit axe, ladite came (43) suivant ledit guide de came (50) de la première extrémité à la deuxième extrémité lorsque la commande de verrouillage (18) passe de la position déverrouillée à la position verrouillée, et inversement.

5. Appareil selon la revendication 4, dans lequel le levier pivotant (41) présente une première extrémité (41a) comportant un ergot (24) qui forme le verrou, qui est rétracte dans le couvercle (12) lorsque la commande de verrouillage (18) est en position déverrouillée, et qui fait saillie à travers une fenêtre du couvercle (12) lorsque la commande de verrouillage (18) est en position verrouillée, ledit ergot (24) étant susceptible de venir en prise avec l'élément de retenue (25) agencé dans le pourtour (9) de l'ouverture lorsque la commande de verrouillage (18) passe de la position déverrouillée à la position verrouillée.

6. Appareil selon la revendication 4 ou 5, dans lequel la came (43) du levier pivotant (41) est sollicitée contre le guide de came (50) de la commande de verrouillage (18) par un moyen élastique (55).

7. Appareil selon l'une des revendications 4 à 6, dans lequel le mécanisme d'actionnement (40) comprend un organe pivotant (45) autour d'un axe (46) sensiblement parallèle à la direction normale (Z) de l'ouverture, et dans lequel le levier pivotant (41) présente une deuxième extrémité munie d'une denture (44) qui engrène un premier secteur denté (48) pratiqué sur l'organe pivotant (45), ledit organe pivotant (45) étant muni d'au moins un deuxième secteur denté (47) qui engrène une denture linéaire (49) reliée à la languette (14).

8. Appareil selon la revendication 7, dans lequel lesdits levier et organe pivotants (41, 45) sont adaptés à créer un déplacement linéaire amplifié de la languette (14) par rapport au déplacement de la première extrémité (41a) dudit levier (41).

9. Appareil selon l'une quelconque des revendications précédentes, dans lequel l'ensemble des éléments (41, 45, 49) du mécanisme d'actionnement (40) est mobile dans un plan parallèle au plan moyen (P) de l'ouverture (10).

10. Appareil selon l'une quelconque des revendications précédentes, dans lequel le boîtier (2) présente une lumière (63) qui débouche dans l'organe verseur (3) et dans laquelle s'étend la languette (14) lorsque la commande de verrouillage (18) est en position verrouillée.

## Claims

1. Electrical liquid-heating appliance comprising a casing (2) that defines a chamber intended to contain a liquid, a top opening (10) for filling the chamber, delimited by a periphery (9), electrical means for heating the liquid, a pouring member (3) communicating with the said chamber and extending close to the opening, and a lid (12) adapted to close off the said opening, the said lid comprising:
- a movable bolt (24) that is able to come into engagement with a retaining element (25) on the casing;
- a locking control (18) connected to the bolt and able to move between a locked position in which the bolt is in engagement with the retaining element when the lid is put in place and an unlocked position in which the bolt is inoperative; and
- a tongue (14) able to move between a retracted position in which it is housed in the lid and a deployed position in which it closes off the pouring member (3), **characterised in that** the tongue (14) is connected to the locking control (18) by an actuation mechanism (40) adapted to place the tongue (14) either in the deployed position when the locking control (18) is in the locked position or in the retracted position when the locking control (18) is in the unlocked position, the said unlocked position being stable.

2. Appliance according to claim 1, in which the tongue (14) is mounted so as to be able to slide with respect to the lid (12) in a substantially radial direction with respect to the normal direction (Z) of the opening, and in which the locking control (18) is mounted so as to rotate with respect to the lid about an axis substantially parallel to the said normal direction.

3. Appliance according to claim 2, in which the lid (12) is removably mounted in the periphery (9) of the opening (10), and comprises a bottom (15) coming into contact with the said periphery (9) of the opening and a top face (19, 20) that forms the locking control (18), the said bottom (15) and the said periphery (9) having reliefs (59, 60) adapted to cooperate together so as to prevent the rotation of the bottom (15) with respect to the casing (2).

4. Appliance according to claim 2 or 3, in which the actuation mechanism (40) comprises a pivoting lever (41) provided with a cam (43), and in which the locking control (18) has an internal face comprising a cam guide (50) that extends from a first end (51) to a second end (52) arranged at a distance from the pivot axis (Z) of the locking control that is greater than the distance from the first end to the said axis, the said cam (43) following the said cam guide (50) from the first end to the second end when the locking control (18) passes from the unlocked position to the locked position, and vice versa.

5. Appliance according to claim 4, in which the pivoting lever (41) has a first end (41a) comprising a lug (24) that forms a bolt, which is retracted into the lid (12) when the locking control (18) is in the unlocked position, and which projects through a window in the lid (12) when the locking control (18) is in the locked position, the said lug (24) being able to come into engagement with the retaining element (25) arranged in the periphery (9) of the opening when the locking control (18) passes from the unlocked position to the locked position.

6. Appliance according to claim 4 or 5, in which the cam (43) of the pivoting lever (41) is urged against the guide cam (50) of the locking control (18) by an elastic means (55).

7. Appliance according to one of claims 4 to 6, in which the actuation mechanism (40) comprises a member (45) pivoting about an axis (46) substantially parallel to the normal direction (Z) of the opening, and in which the pivoting lever (41) has a second end provided with teeth (44) that mesh with a first toothed sector (48) formed on the pivoting member (45), the said pivoting member (45) being provided with at least a second toothed sector (47) that meshes with a linear set of teeth (49) connected to the tongue (14).

8. Appliance according to claim 7, in which the said pivoting lever and member (41, 45) are adapted to create an amplified linear movement of the tongue (14) with respect to the movement of the first end (41a) of the said lever (41).

9. Appliance according to any one of the preceding claims, in which all the elements (41, 45, 19) of the actuation mechanism (40) are able to move in a plane parallel to the mid-plane (P) of the opening (10).

10. Appliance according to any one of the preceding claims, in which the casing (2) has an aperture (63) that emerges in the pouring member (3) and in which the tongue (14) extends when the locking control (18) is in the locked position.

## Patentansprüche

1. Elektrische Vorrichtung zum Erhitzen von Flüssigkeit mit einem Gehäuse (2), das einen Raum zum Aufnehmen einer Flüssigkeit definiert, einer oberen Öffnung (10) zum Füllen des Raumes, der durch einen Umfang (9) begrenzt ist, elektrischen Mitteln zum Erhitzen der Flüssigkeit, einem Gießelement (3), das mit dem Raum in Verbindung steht und sich in der Nähe der Öffnung erstreckt, und einem Deckel (12) der zum Verschließen der Öffnung geeignet ist, wobei der Deckel umfasst:
- einen beweglichen Riegel (24), der mit einem Halteelement (25) des Gehäuses in Eingriff kommen kann;
- eine Verriegelungssteuerung (18), die mit dem Riegel verbunden und zwischen einer Verriegelungsposition, in der der Riegel mit dem Halteelement in Eingriff ist, wenn der Deckel eingesetzt ist, und einer Entriegelungsposition, in der der Riegel unwirksam ist, bewegbar ist; und
- eine Zunge, die zwischen einer zurückgezogenen Position, in der sie in dem Deckel aufgenommen ist, und einer Ausgangsposition, in der sie das Gießelement (3) verschließt, bewegbar ist, **dadurch gekennzeichnet, dass** die Zunge (14) mit der Verriegelungssteuerung (18) über ein Betätigungsmechanismus (40) verbunden ist, der dazu eingerichtet ist, die Zunge (14) entweder in die Ausgangsposition zu bringen, wenn die Verriegelungssteuerung (18) in der Verriegelungsposition ist, oder in die zurückgezogene Position, wenn die Verriegelungssteuerung (18) in der Entriegelungsposition ist, wobei die Entriegelungsposition stabil ist.

2. Vorrichtung nach Anspruch 1, wobei die Zunge (14) relativ zu dem Deckel (12) entlang einer im Verhältnis zu der Normalrichtung (Z) der Öffnung im Wesentlichen radialen Richtung verschiebbar montiert ist und wobei die Verriegelungssteuerung (18) im Verhältnis zu dem Deckel um eine zu der Normalrichtung im Wesentlichen parallele Achse drehbar montiert ist.

3. Vorrichtung nach Anspruch 2, wobei der Deckel (12) in dem Umfang (9) der Öffnung (10) lösbar montiert ist und einen Boden (15) aufweist, der mit dem Umfang (9) der Öffnung in Kontakt kommt, sowie eine Oberseite (19, 20), welche die Verriegelungssteuerung (18) bildet, wobei der Boden (15) und der Umfang (9) Strukturen (59, 60) haben, die derart zusammenwirken können, dass die Drehung des Bodens (15) relativ zu dem Gehäuse (2) verhindert wird.

4. Vorrichtung nach Anspruch 2 oder 3, wobei der Betätigungsmechanismus (40) einen Schwenkhebel (41) mit einem Nocken (43) aufweist und wobei die Verriegelungssteuerung (18) eine Innenfläche mit einer Nockenführung (50) aufweist, die sich von einem ersten Ende (51) zu einem zweiten Ende (52) erstreckt, das von der Schwenkachse (Z) der Verriegelungssteuerung in einem Abstand angeordnet ist, der größer ist als der Abstand des ersten Endes zu dieser Achse, wobei der Nocken (43) der Nockenführung (50) von dem ersten Ende zum zweiten Ende folgt, wenn die Verriegelungssteuerung (18) von der Entriegelungsposition in die Verriegelungsposition geht, und umgekehrt.

5. Vorrichtung nach Anspruch 4, wobei der Schwenkhebel (41) ein erstes Ende (41a) mit einem Zapfen (24) aufweist, der den Riegel bildet und in den Deckel (12) zurückgezogen ist, wenn die Verriegelungssteuerung (18) in der Entriegelungsposition ist, und durch ein Fenster des Deckels (12) vorsteht, wenn die Verriegelungssteuerung (18) in der Verriegelungsposition ist, wobei der Zapfen (24) mit dem Halteelement (25), das in dem Umfang (9) der Öffnung angeordnet ist, in Eingriff kommen kann, wenn die Verriegelungssteuerung (18) von der Entriegelungsposition in die Verriegelungsposition geht.

6. Vorrichtung nach Anspruch 4 oder 5, wobei der Nocken (43) des Schwenkhebels (41) von einer elastischen Einrichtung (55) gegen die Nockenführung (50) der Verriegelungssteuerung (18) gedrückt wird.

7. Vorrichtung nach einem der Ansprüche 4 bis 6, wobei der Betätigungsmechanismus (40) ein Schwenkelement (45) aufweist, welches um eine zur Normalrichtung (Z) der Öffnung im Wesentlichen parallele Achse schwenkt, und wobei der Schwenkhebel (41) ein zweites Ende mit einer Zahnung (44) aufweist, die mit einem ersten in dem Schwenkelement (45) ausgebildeten Zahnabschnitt (48) kämmt, wobei das Schwenkelement (45) wenigstens einen zweiten Zahnabschnitt (47) aufweist, der mit einer mit der Zunge (14) verbundenen, linearen Zahnung (49) kämmt.

8. Vorrichtung nach Anspruch 7, wobei der Schwenkhebel (41) und das Schwenkelement (45) eine verstärkte lineare Verschiebung der Zunge (14) im Verhältnis zur Verschiebung des ersten Endes (41 a) des Hebels (41) bewirken können.

9. Vorrichtung nach einem der vorangehenden Ansprüche, wobei die Anordnung aus den Elementen (41, 45, 49) des Betätigungsmechanismus (40) in einer zur Mittelebene (P) der Öffnung (10) parallelen Ebene bewegbar ist.

10. Vorrichtung nach einem der vorangehenden Ansprüche, wobei das Gehäuse (2) eine Öffnung (63) aufweist, die in dem Gießelement mündet und in die sich die Zunge (14) erstreckt, wenn die Verriegelungssteuerung (18) in der Verriegelungsposition ist.
